(19) Europäisches Patentamt / European Patent Office / Office européen des brevets

(11) **EP 1 656 192 B1**

(12) **EUROPEAN PATENT SPECIFICATION**

(45) Date of publication and mention of the grant of the patent:
**26.08.2015 Bulletin 2015/35**

(51) Int Cl.:
**G01N 1/38** *(2006.01)*    **B01D 11/04** *(2006.01)*
**G01N 1/40** *(2006.01)*    **C12N 15/10** *(2006.01)*

(21) Application number: **04740630.1**

(22) Date of filing: **05.07.2004**

(86) International application number:
**PCT/EP2004/007290**

(87) International publication number:
**WO 2005/018773 (03.03.2005 Gazette 2005/09)**

(54) **METHODS FOR EXTRACTION AND CONCENTRATION OF HYDROPHILIC COMPOUNDS FROM HYDROPHOBIC LIQUID MATRICES**

VERFAHREN ZUM EXTRAHIEREN UND KONZENTRIEREN VON HYDROPHILEN VERBINDUNGEN AUS HYDROPHOBEN FLÜSSIGKEITS-MATRIZEN

PROCEDES D'EXTRACTION ET DE CONCENTRATION DE COMPOSES HYDROPHILES A PARTIR DE MATRICES DE LIQUIDES HYDROPHOBES

(84) Designated Contracting States:
**AT BE BG CH CY CZ DE DK EE ES FI FR GB GR HU IE IT LI LU MC NL PL PT RO SE SI SK TR**

(30) Priority: **20.08.2003 EP 03018908**

(43) Date of publication of application:
**17.05.2006 Bulletin 2006/20**

(73) Proprietor: **Merck Patent GmbH**
**64293 Darmstadt (DE)**

(72) Inventors:
• **LINDHARDT, Charlotte**
**Newport NP10 0DN (GB)**
• **ANCRUM, Tony**
**Southampton SO45 3PX (GB)**
• **DAVIES, Alan, Michael**
**Graigwen**
**Pontypridd CF37 2HB (GB)**

• **KAU, Paul**
**Manor Chase Beddau**
**Pontypridd CF38 2JP (GB)**

(56) References cited:
EP-A- 0 818 225       WO-A-01/76385
US-A- 3 696 030       US-A- 5 266 205
US-A- 5 271 840       US-A- 5 625 053
US-A- 2002 068 309    US-A1- 2003 120 062

• GAYLARDE C C ET AL: "MICROBIAL CONTAMINATION OF STORED HYDROCARBON FUELS AND ITS CONTROL", REVISTA DE MICROBIOLOGIA, SOCIEDADE BRASILEIRA DE MICROBIOLOGIA, BR, vol. 30, no. 1, 1 January 1999 (1999-01-01), pages 1-10, XP001146469, ISSN: 0001-3714, DOI: 10.1590/S0001-37141999000100001

## Description

This invention relates to extraction and concentration of hydrophilic compounds, biological materials or particles dispersed or distributed in hydrophobic liquid matrices for the purpose of detection and /or quantification of such contaminants. This invention relates furthermore to capture solutions which improve recovery of such compounds.

## Background of the invention

Small amounts of hydrophilic compounds (such as ATP, NAD, NADP, NADH, NADPH, enzymes, free fatty acids, preservatives, biocides, salts) as well as micro-organisms or other particles are often dispersed or distributed in hydrophobic liquid matrices such as crude oil, vegetable oil, petrol and kerosene. Such compounds or particles may constitute a contamination or adulteration or may be additives and preservatives of which a specific concentration is required. It may therefore be desirable to detect and/or quantify such compounds, to establish whether a particular product is safe and appropriate for a particular use. The hydrophilic compounds mentioned above are summarized in the present description as hydrophilic compounds.

By performing an aqueous extraction the hydrophilic compounds can be separated from the hydrophobic matrix and detection / quantification can then be performed on the aqueous extract. To obtain a high recovery in the extraction it is important to obtain good dispersion of the aqueous extractant throughout the hydrophobic matrix. To obtain a low detection limit it is important to keep the ratio of extractant to matrix low. To obtain a fast recovery it is important to get a rapid phase separation after the extraction step. By using a capture solution according to the invention the recovery of hydrophilic compounds is greatly improved.

## Description of the invention

The present invention relates to a method of extraction of hydrophilic compounds dispersed or distributed in a hydrophobic/non-polar/non-ionic liquid matrix. The present invention relates also to a capture solution. The object of the present invention is a method for detection and/or quantification by extraction and concentration of contaminants in form of hydrophilic compounds, biological materials or particles dispersed or distributed in fuel as hydrophobic/non-polar/non-ionic liquid matrices comprising the following steps:

a) providing a sample of a hydrophobic liquid as hydrophobic/nonpolar/non-ionic liquid matrix;
b) adding to said sample an aqueous capture solution comprising 0,5 - 10,00 g soy lecithin, 0,01 - 0,20 g methylene blue, 0,01 - 0,05 g sodium hypochlorite and 1000,00 g water, which is added to the sample in a low ratio of 1 : 10 or less;
c) mixing said sample and said capture solution thoroughly;
d) allowing the aqueous phase to separate from the sample phase;
e) measuring the hydrophilic compound or the biological material or particles in the aqueous phase.

In this method preferably a capture solution is an aqueous solution comprising soy lecithin, methylene blue and sodium hypochloride.

The reagent used as capture solution of the present invention is composed as follows: in an amount of 1000ml of water lecithin is dissolved in an amount of 0.50 - 10.0 g as an extractant together with methylene blue in an amount of 0.01 - 0.20g, and sodium hypochlorite in an amount of 0.01 - 0.05g. This capture solution is added in a low ratio of about 1 : 10 or less to the sample.

Another object of the invention is a reagent kit for the detection of biomass in fuel comprising a capture solution according to the present invention used in step b) of the method and a pen tube comprising luciferase for measuring ATP by luminometry. Such a reagent kit is especially suitable for the detection of biomass in aviation fuel, diesel or kerosene according to the above method comprising a capture solution used in step b) of the method.

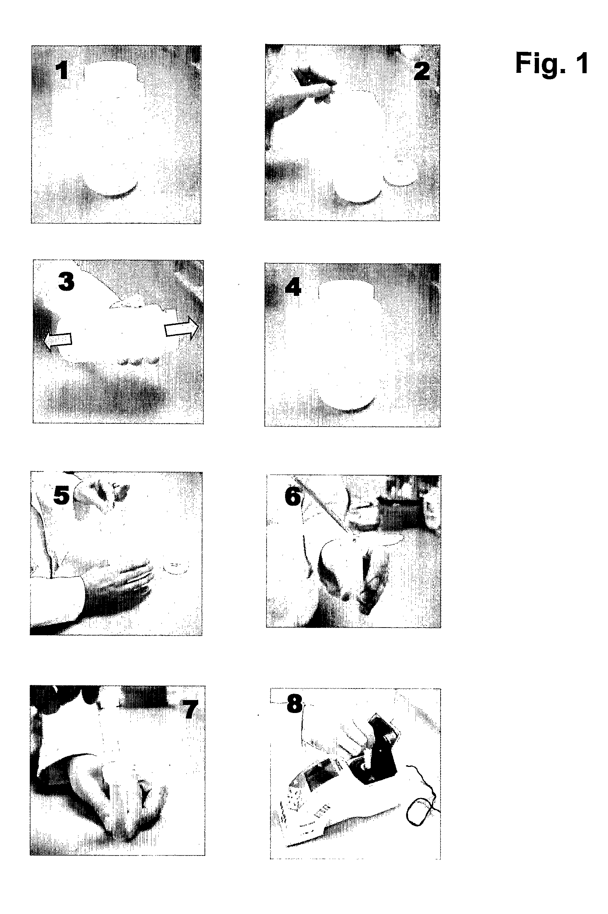

Figure 1 depicts the procedure according to the present invention. Details are given in the examples. The steps shown are: (1) One litre of sample is collected; (2) the capture solution is added; (3) the mixture is shaken vigorously for 10 seconds; (4) the mixture then is left standing for 5 minutes; (5) the capture solution is collected; (6) the capture solution is added to a HY-LiTE ® pen tube; (7) the capture solution is tested using a HY-LiTE® pen; (8) read HY-LiTE ® pen: the emitted light is measured in a HY-LiTE® luminometer.

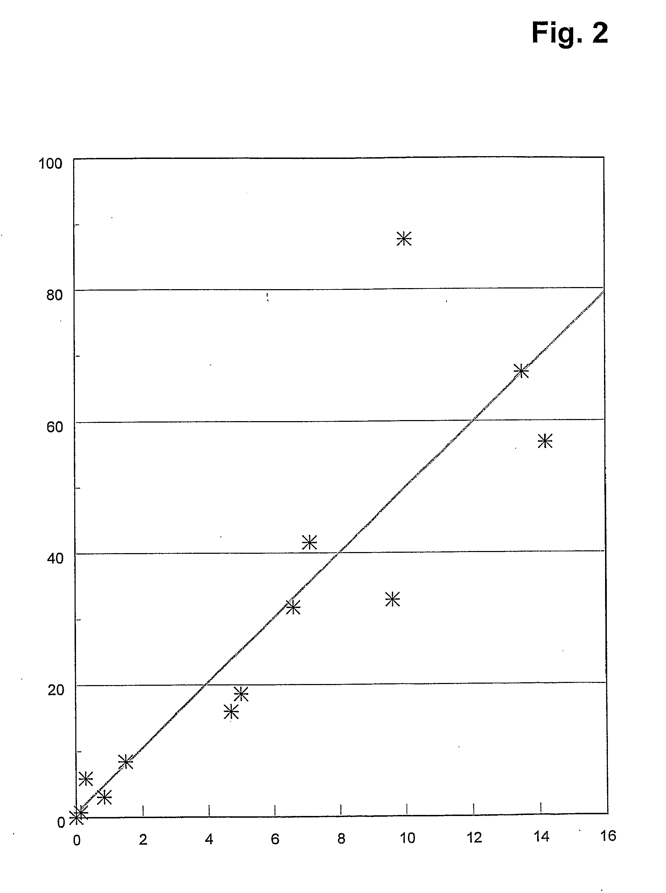

Figure 2 shows a comparison of biomass measurements in extracts of kerosene using the extraction method according to the invention. Count of viable cells (x-axis) is compared to the luminometric determination of ATP (y-axis). Experimental details are described in example 3.

The capture solution used according to the present invention is an aqueous solution of an extractant. This capture solution optionally may contain acids, bases or buffers as additive for maintaining a defined pH and/or neutral salts in order to maintain a given ionic strength, as well as preservatives to To improve the visibility of the aqueous phase, methylene blue, a water-soluble dye, is addled. The concentration of the water-soluble dye is chosen to allow good visibility of the aqueous phase.

The extractant is selected out of the group of tensids, surfactants, or emulsifyers. A large variation of compounds are known in the art which may be naturally occurring, derivatives of natural products or synthetic, examples are shown in the following table:

| Type of surfactant / emulsifier | Examples |
|---|---|
| Non-ionic | Polysorbates (e.g. TWEEN (R) 20, TWEEN (R) 80), Ethoxylated 4-(1,1,3,3-tetramethylbutyl)phenol (Triton (R) X-100), Sorbitan mono-laureate, Sorbitan mono-oleate, alkyl-polyethyleneglycol-ether (e.g. polyethyleneglycolether of laurylalcohohl, BRIJ (R) 35) |
| Anionic | Sodium dodecyl sulphate (SDS), Sodium cholate hydrate, Phosphatidyl inositol, Deoxycholic acid Sodium salt, Sodium propionate, Potassium sorbate |
| Cationic | Benzalkonium chloride, Dodecyl trimethyl ammonium bromide, Cetyl pyrimidinium bromide, Cetyl trimethyl ammonium bromide |
| Amphoteric, zwitterionic | Lecithins, cephalins, CHAPS, CHAPSO |

Beyond the classification given above surfactants and emulsifiers can be categorized by the balance of their hydrophilic-lipophilic properties (HLB-value), or by their critical micellar concentration (CMC), or by their solubility in water.

In the art surfactants or emulsifyers are used to produce and stabilize oil in water or water in oil dispersions. In addition these substances are used to solubilize hydrophobic substances in aqueous solutions. Some other use of these substances is to disrupt biological membranes.

According to the present invention the extractant is soy lecithin.

A capture solution according to the invention can optionally contain further extractants out of the group defined above.

The effective concentration of the soy lecithin used in the capture solution is preferably between 0.1% (w/v) and 1% (w/v). Using other surfactants instead of soy lecithin as extractant is beyond this invention. When using additional surfactants, preferred ranges depend on HLB-value and critical micellar concentration, as well as on solubility in water. For such other surfactants limits for effective concentrations can be deduced from Examples 2 and 5.

The selection of the surfactant component(s) of the capture solution depends on the sample matrix and the type of reaction used for the detection of the contaminants, e.g.: Surfactants like SDS tend to lyse cells and are therefor not very suitable if contaminating bacteria are to be detected by growth as viable cell count. In some instances the use of defined chemical entities like SDS might be advantageous over less defined mixtures like lecithins. Rapid phase separation without additional measures like vibration or centrifugation is advantageous.

Using a capture solution according to the present invention results in a recovery rate for the hydrophilic compound of more than 50 %, preferably more than 80 %

An example of a detailed preferred embodiment could be:

| | |
|---|---|
| Soy Lecithin: | 0.50 - 10.00 g |
| Methylene Blue: | 0.01-0.20 g |
| Sodium Hypochlorite: | 0.01-0.05 g |
| Water: | ad 1000.00 ml |

This capture solution is extremely useful for detection of contaminants in fuels, e.g. diesel, kerosene.

A low ratio (1:10 or less; preferred: 1:100 or less; mostly preferred 1:1000 or less) of an aqueous capture solution containing an extractant is added to the sample to be tested. The lower limit for the volume ratio of the capture solution is given by the solubility of water in the sample, i.e. the volume ratio has to be large enough so that an aqueous phase can be separated from the bulk of the hydrophobic sample. Capture solution and sample is mixed to disperse the capture solution throughout the sample.

The resultant mixture is allowed to settle for a period of time to obtain phase separation. If necessary, the phase separation can be promoted by addition of a further small amount of ionic compounds (typically salt, acid or base) to break the emulsion or by physical treatment (e.g. temperature change, vibration, centrifugation).

After phase separation, the aqueous phase is retrieved and detection of the compounds, biological materials and particles can be performed as desired on the isolated aqueous phase. Methods for this purpose are known in the art. Examples are: measuring ATP by luminometry using luciferase, measuring NAD and/or NADP by cycling reactions, determining the cell count of microbes by plating defined volumes onto a suitable solid growth medium supporting the growth of the microbe to be counted. WO 02/22854 discloses a cycling reaction scheme for measuring NAD and/or NADP. For the determination of enzyme activities spectrophotometric procedures are known. Toxins, antibiotics, or growth inhibitors can be determined using biological tests like the radial diffusion test using susceptive bacteria as test organism.

Separation times may vary and may be accelerated by use of containers with smooth, hydrophobic/non-polar/non-ionic inner walls. Containers having a conical bottom allow collecting the aqueous lower phase more easily.

The extractant according to the present invention is prepared by dissolving the ingredients in distilled water.

Without further elaboration, it is believed that one skilled in the art can, using the preceding description, utilize the present invention to its fullest extent. The preferred specific embodiments and examples are, therefore, to be construed as merely illustrative, and not limitative of the disclosure in any way whatsoever.

**Literature References:**

Institute of Petroleum. Standard IP 385/99: Determination of the viable aerobic microbial content of fuels and fuel components boiling below 390°C - Filtration and culture method IATA: Guidance Material on Microbiological Contamination in Aircraft Fuel Tanks. 1 st Edition, Effective 1 December 2002

C. Gaylarde et al., "Microbial contamination of stored hydrocarbon fuels and its control", Revista de Microbiologia (1999), 30, pages 1-10

**Examples**

**Example 1: Improvement of extraction efficency using capture solution (extraction of ATP)**

The extraction of free chemical from a hydrophobic liquid sample is illustrated in table 1 a. The chosen sample is diesel and the marker for free chemical is ATP. 10ml of diesel fuel are transferred to each of two bottles. $1\mu$l of $1.0 \times 10^{-4}$M ATP solution is added to each of the bottles and mixed on vortex mixer for 60 seconds. 1ml of water only is added to one bottle and 1ml of capture solution (0.1 %(w/v) Lecithin) is added to the other bottle. Both bottles are mixed on vortex mixer for 10 seconds. Bottles are left to stand for 30 minutes before removing settled water and capture solution. Free ATP in recovered water and capture solution is measured by assay using Merck KGaA bioluminescence reagents. 100% recovery is determined by adding $1\mu$l of $1.0 \times 10^{-4}$M ATP directly to 1ml of water or 1 ml of capture solution and measuring free ATP.

% recovery is calculated,

$$\% \text{ recovery} = \frac{\text{free ATP measured in water or capture solution}}{\text{free ATP measured from 100\% recovery}} \times 100$$

Table 1a:

| extractant | % recovery |
|---|---|
| water | 3 |
| capture solution (0.1%(w/v) Lecithin) | 70 |

The above experiment is repeated using two different capture solutions (0.1 %(w/v) Lecithin or 0.1 %(w/v) SDS). The procedure is slightly modified: Before removing the aqueous phase the bottles are left to stand for 60 minutes (instead of 30 minutes):

**Table 1b:**

| extractant | % recovery |
|---|---|
| water | 9 |
| Capture solution (0.1 %(w/v) Lecithin) | 66 |
| Capture solution (0.1%(w/v)SDS | 78 |

These results show that capture solutions including lecithin or SDS are by far better than water alone for ATP extraction and concentration of ATP from diesel.

**Example 2**: **Improvement of extraction efficency using capture solution (extraction of bacteria using ATP as marker)**

The capture and subsequent measurement of biomass components in a hydrophobic liquid sample is illustrated in table 2a. The chosen sample is aviation fuel and the marker for biomass determination is Adenosine Triphosphate (ATP).

500ml of fresh aviation fuel is measured into each of two containers. 25μl of a bacterial suspension (*Pseudomonas fluorescens*) is added to each container. Both containers are manually mixed by shaking to distribute the bacteria followed by mixing on a roller mixer for 60 minutes and then finally standing for 30 minutes before testing. 0.5ml of water only is added to one container and 0.5ml of capture solution (0.1%(w/v) Lecithin) is added to the other container. Both bottles are mixed by shaking for 10 seconds. Containers are left for 5 minutes before removing the settled water and capture solution with a Pasteur pipette for testing. Total ATP in recovered water and capture solution is measured by assay using Merck KGaA bioluminescence reagents. 100% recovery is determined by adding 25μl of same bacterial suspension directly to 0.5ml of water or 0.5ml of capture solution and measuring total ATP.

% recovery is calculated,

$$\% \text{ recovery} = \frac{\text{total ATP measured in water or capture solution}}{\text{totalATP measured from 100\% recovery}} \times 100$$

**Table 2a:**

| extractant | % recovery |
|---|---|
| water | 26 |
| capture solution (0.1%(w/v) Lecithin) | 61 |

The above experiment is repeated using two different capture solutions (0.1 %(w/v) Lecithin or 0.05%(w/v) SDS). The procedure is slightly modified: 700ml of fresh aviation fuel is measured into each of three containers. 25μl of a bacterial suspension (*Pseudomonas fluorescens*) is added to each container. All containers are manually mixed by shaking to distribute the bacteria 1.0ml of water only is added to one container and 1.0ml of capture solution (0.1%(w/v) Lecithin or 0.05%(w/v)SDS) is added to the other containers. All bottles are mixed by shaking for 10 seconds. Containers are left for 5 minutes before removing the settled water and capture solutions with a Pasteur pipette for testing. Total ATP in recovered water and capture solution is measured by assay using Merck KGaA bioluminescence reagents. 100% recovery is determined by adding 25μl of same bacterial suspension directly to 1.0ml of water or 1.0ml of capture solution and measuring total ATP.

% recovery is calculated,

$$\% \text{ recovery} = \frac{\text{total ATP measured in water or capture solution}}{\text{total ATP measured from 100\% recovery}} \times 100$$

**Table 2b:**

| extractant | % recovery |
|---|---|
| water | 48 |
| Capture solution (0.1%(w/v) Lecithin) | 94 |
| Capture solution (0.05%(w/v)SDS) | 92 |

These results show that capture solutions including lecithin or SDS are better than water alone for total ATP (biomass) extraction and concentration from aviation fuel..

**Example 3: Extraction of cells and determination of biomass comparing viable cell count and ATP determination**

The capture and subsequent measurement of free chemical and biomass components in a hydrophobic liquid sample is illustrated in table 3.

The chosen sample is aviation fuel and the marker for free chemical and biomass determination is Adenosine Triphosphate (ATP). ATP levels indicate levels of microbial contamination of the aviation fuel. Aviation fuel collected from aeroplane wing tanks is used as sample to measure ATP levels and TVC (total viable count). Fuel samples are processed as described below so that an aqueous capture solution can be tested for ATP levels and TVC.

1.0ml of capture solution (0.1%(w/v) Lecithin) is added to approximately 1.0L of fuel sample, fuel and capture solution are mixed by manual shaking for 10 seconds, sample is allowed to stand for 5 minutes before removing the settled capture solution with a disposable Pasteur pipette, capture solution is tested for ATP and TVC (figure 1 shows protocol for measuring ATP).

Free ATP (extracellular ATP) and Total ATP (biomass ATP + extracellular ATP) levels are measured with the HY-LiTE® ATP luminescence assay manufactured by Merck KGaA, Germany. To measure free ATP 28$\mu$l of capture solution is pipetted into the HY-LiTE® pen (via the reagent cap) and light emission (expressed as RLU - relative light units) measured in the HY-LiTE® luminometer. Total ATP is measured by sampling the capture solution with the HY-LiTE® pen following manufacturer's instructions and light emission measured in the HY-LiTE® luminometer. TVC is determined by plating out 100$\mu$l of neat, $10^{-2}$, and $10^{-4}$ dilutions of capture solution on Tryptone Soy Agar plates. Plates are incubated for 2 days at 20°C before counting colonies. Colony forming units (cfu/ml) per ml are calculated, cfu/ml = no.of colonies x dilution factor x 10

**Table 3:**

| sample | Free ATP (RLU) | Total ATP (RLU) | TVC (cfu/ml) |
|---|---|---|---|
| 1 | 1400 | 43000 | $7.1 \times 10^6$ |
| 2 | 210 | 57000 | $1.42 \times 10^7$ |
| 3 | 560 | 68000 | $1.35 \times 10^7$ |
| 4 | 210 | 32000 | $6.6 \times 10^6$ |
| 5 | 69 | 870 | $1.42 \times 10^5$ |
| 6 | 76 | 6000 | $3.0 \times 10^5$ |
| 7 | 81 | 8500 | $1.5 \times 10^6$ |
| 8 | 30 | 16000 | $4.7 \times 10^6$ |
| 9 | 380 | 19000 | $5.0 \times 10^6$ |
| 10 | 91 | 3200 | $8.5 \times 10^5$ |
| 11 | 340 | 88000 | $1.0 \times 10^7$ |
| 12 | 100 | 33000 | $9.6 \times 10^6$ |
| 13 | 36 | 76 | $0.0 \times 10^0$ |
| assay background | 56 | 56 | --- |

Data shows that free ATP and total ATP can be extracted and concentrated from the hydrophobic phase into the capture solution at levels significantly different from assay background. Comparing the biomass ATP and the TVC one observes an excellent correlation showing that the microbes have been extracted as viable cells in reproducible yield. The correlation data are:

$$r = 0.8872$$

$$y = 0.0049293\,x + 676{,}7$$

The data are presented in figure 2.

### Example 4: Improvement of extraction efficiency using capture solution (extraction of nitrate)

The extraction of free chemical from a hydrophobic liquid sample is illustrated in table 4. The chosen sample is aviation fuel and the marker for free chemical is nitrate. 100ml of fresh aviation fuel fuel is transferred to each of three bottles. $9\mu l$ of 32.4g/Litre Potassium Nitrate solution is added to each of the bottles and mixed by manual shaking for 10 seconds and then allowed to stand for 5 minutes. 1ml of water only is added to one bottle and 1ml of capture solution (0.1 %(w/v) Lecithin or 0.05%(w/v) SDS) is added to the other bottles. All bottles are mixed for 10 seconds by manual shaking. Bottles are left to stand for 5 minutes before removing settled water and capture solution. Nitrate in recovered water and capture solution is measured using a Merck KGaA nitrate assay. 100% recovery is determined by adding $9\mu l$ of 32.4g/Litre Potassium Nitrate solution directly to 1ml of water or 1ml of capture solution and measuring nitrate.
% recovery is calculated,

$$\% \text{ recovery} = \frac{\text{nitrate measured in water or capture solution}}{\text{nitrate measured from 100\% recovery}} \times 100$$

**Table 4:**

| Extractant | % recovery |
|---|---|
| Water | 47 |
| Capture solution (0.1 %(w/v) Lecithin) | 70 |
| Capture solution (0.05%(w/v)SDS | 85 |

This result shows that capture solution is better than water alone for extraction and concentration of nitrate from aviation fuel.

### Example 5: Extraction of ATP from a hydrophobic liquid using a variety of extractants

The extraction of free chemical from a hydrophobic liquid sample by a variety of extractants is illustrated in tables 5 and 6. The chosen sample is diesel and ATP is used as chemical to be extracted. 10ml of diesel fuel is transferred to each of a number of bottles. $1\mu l$ of $1.0 \times 10^{-4}M$ ATP solution (experiment A; table 5) or $5\mu l$ of $1.0 \times 10^{-4}M$ ATP solution (experiment B; table 6) is added to each of the bottles and mixed on vortex mixer for 60 seconds. 1ml of water only is added to one bottle and 1ml of the test compound solution or mixture of compounds under test is added to another bottle. All bottles are mixed on vortex mixer for 10 seconds. Bottles are left to stand for 5 minutes before removing settled water and test compound solution. Free ATP in recovered water and compound solution is measured by assay using Merck KGaA bioluminescence reagents. 100% recovery is determined by adding $1\mu l$ of $1.0 \times 10^{-4}M$ ATP (experiment A) or $5\mu l$ of $1.0 \times 10^{-4}M$ ATP (experiment B) directly to 1 ml of water or 1 ml of test compound solution and measuring free ATP.
% recovery is calculated,

$$\% \text{ recovery} = \frac{\text{free ATP measured in water or test compound solution}}{\text{free ATP measured from 100\% recovery}} \times 100$$

**Table 5 (experiment A):**

| | | % Recovery | | | | | |
|---|---|---|---|---|---|---|---|
| | | Concentration of extractant %(w/v) | | | | | |
| Class | Compound | 0.001 | 0.01 | 0.1 | 1.0 | 10 | N/A |
| | Water | | | | | | 11 |
| Phospholipids | Soy lecithin | 11 | | 35 | 64 | | |
| Anionic detergent | SDS | 33 | | 70 | 47 | | |

**Table 6 (Experiment B):**

| | | % Recovery | | | | | |
|---|---|---|---|---|---|---|---|
| | | Concentration of extractant %(w/v) | | | | | |
| Class | Compound | 0.001 | 0.01 | 0.1 | 1.0 | 10 | N/A |
| | Water | | | | | | 6 |
| Phospholipids | Phosphotidyl inositol | 74 | | 78 | 65 | | |
| Anionic detergent | Deoxycholic acid Sodium salt | 6 | 35 | 88 | 48 | | |
| | Sodium propionate | | | 41 | 67 | | |
| | Potassium sorbate | | | 56 | 82 | | |
| Mixtures | 0.1%Lecithin + 0.001 %SDS | | | | | | 89 |
| | 0.1%Lecithin + 0.1%Tween 80 | | | | | | 82 |
| | 0.001%SDS + 0.1%Tween 80 | | | | | | 82 |

These results show that excellent extraction rates are obtained when using solutions containing phospholipids, anionic detergents and mixtures of these with each other or with non-ionic detergents.

Example 6: Extraction of ATP from a hydrophobic liquid using a variety of other surfactants

The experiments of Example 5 are repeated using surfactants different from extractants according to the present invention, as well as some other chemicals commonly used in extraction procedures. In experiment C, $1\mu l$ of $1.0 \times 10^{-4}M$ ATP solution is added to bottles and 100% control and in experiment D, $5\mu l$ of $1.0 \times 10^{-4}M$ ATP solution is added to bottles and 100% control. The results are summarized in tables 7 and 8 below.

**Table 7 (Comparison Experiment C):**

| | | % Recovery | | | | | |
|---|---|---|---|---|---|---|---|
| | | Concentration of compound %(w/v) | | | | | |
| Class | Compound | 0.001 | 0.01 | 0.1 | 1.0 | 10 | N/A |
| | Water | | | | | | 11 |

(continued)

| Class | Compound | % Recovery Concentration of compound %(w/v) 0.001 | 0.01 | 0.1 | 1.0 | 10 | N/A |
|---|---|---|---|---|---|---|---|
| Zwitterionic detergent | CHAPS | 10 | | 7 | 4 | | |
| | CHAPSO | 7 | | 8 | 8 | | |
| Non-ionic | Tween 20 | 9 | | 8 | 14 | | |
| | Tween 80 | 11 | | 18 | 12 | | |
| | Triton X-100 | 3 | | 9 | 11 | | |
| | Sorbitan mono-laureate | 6 | | 1 | 23 | | |
| | Sorbitan mono-oleate | 14 | | 11 | 7 | | |
| | Brij 35 | 7 | | 18 | 15 | | |

### Table 8 (Comparison Experiment D):

| Class | Compound | % Recovery Concentration of compound %(w/v) 0.001 | 0.01 | 0.1 | 1.0 | 10 | N/A |
|---|---|---|---|---|---|---|---|
| | Water | | | | | | 6 |
| Cationic detergents | Cetyl pyrimidinium bromide | 2 | 4 | 40 | 42 | | |
| | Dodecyl trimethyl ammonium bromide | 7 | 22 | 6 | 20 | | |
| | Cetyl trimethyl ammonium bromide | | 20 | 41 | 35 | | |
| | Benzalkonium chloride | 4 | 4 | 8 | 38 | | |
| Surfactant / chemical | Poly vinyl alcohol (PVA) | 4 | 4 | 1 | 1 | | |
| | Triethylene glycol (trigol) | | | | 5 | 6 | |
| | Diethylene glycol | | | | 3 | 2 | |
| | Poly ethylene glycol 300 (PEG300) | | | | 6 | 4 | |
| | Polyethylene glycol 4000 (PEG4000) | | | | 6 | 3 | |
| | DMSO | | | | 9 | 15 | |
| | Urea | | | 11 | 28 | | |
| Mixtures | 0.1%Lecithin + 0.1%Benzalkonium chloride | | | | | | 14 |
| | 0.1%Benzalkonium chloride + 0.001 %SDS | | | | | | 5 |
| | 0.1%Benzalkonium chloride + 0.1%Tween 80 | | | | | | 7 |

These comparison experiments show that some surfactants are much less suitable for extracting hydrophilic compounds from hydrophobic matrices.

**Claims**

1. A method for detection and/or quantification by extraction and concentration of contaminants in form of hydrophilic compounds, biological materials or particles dispersed or distributed in fuel as hydrophobic/non-polar/non-ionic liquid matrices comprising the following steps:

a) providing a sample of a hydrophobic liquid as hydrophobic/nonpolar/non-ionic liquid matrix;
b) adding to said sample an aqueous capture solution comprising 0,5 - 10,00 g soy lecithin, 0,01 - 0,20 g methylene blue, 0,01 - 0,05 g sodium hypochlorite and 1000,00 g water, which is added to the sample in a low ratio of 1 : 10 or less;
c) mixing said sample and said capture solution thoroughly;
d) allowing the aqueous phase to separate from the sample phase;
e) measuring the hydrophilic compound or the biological material or particles in the aqueous phase.

2. A method according to claim 1, wherein the added capture solution contains lecithin in an effective concentration between 0.1 and 1 % (w/v).

3. A reagent for quantification by extraction and concentration of hydrophilic compounds, biological materials or particles dispersed or distributed in hydrophobic/nonpolar liquid matrices comprising 0,5 - 10,00 g soy lecithin, 0,01 - 0,20 g methylene blue, 0,01 - 0,05 g sodium hypochlorite and 1000,00 g water.

## Patentansprüche

1. Verfahren zum Nachweis und/oder zur Quantifizierung durch Extraktion und Konzentration von Verunreinigungen in Form von hydrophilen Verbindungen, biologischen Materialien oder Teilchen, die in Kraftstoff als hydrophobe/unpolare/nichtionische Flüssigkeitsmatrices dispergiert oder verteilt sind, mit den folgenden Schritten:

a) Bereitstellen einer Probe einer hydrophoben Flüssigkeit als hydrophobe/unpolare/nichtionische Flüssigkeitsmatrix;
b) Versetzen der Probe mit einer wässrigen Fängerlösung enthaltend 0,5 - 10,00 g Sojalecithin, 0,01 - 0,20 g Methylenblau, 0,01 - 0,05 g Natriumhypochlorit und 1000,00 g Wasser, die zu der Probe in einem niedrigen Verhältnis von 1 : 10 oder weniger hinzugegeben wird;
c) gründliches Vermischen der Probe und der Fängerlösung;
d) Abtrennen lassen der wässrigen Phase von der Probenphase;
e) Messen der hydrophilen Verbindung oder des biologischen Materials oder der biologischen Teilchen in der wässrigen Phase.

2. Verfahren nach Anspruch 1, bei dem die hinzugegebene Fängerlösung Lecithin in einer wirksamen Konzentration zwischen 0,1 und 1 % (w/v) enthält.

3. Reagenz zur Quantifizierung durch Extraktion und Konzentration von hydrophilen Verbindungen, biologischen Materialien oder Teilchen, die in hydrophoben/unpolaren Flüssigkeitsmatrices dispergiert oder verteilt sind, enthaltend 0,5 - 10,00 g Sojalecithin, 0,01 - 0,20 g Methylenblau, 0,01 - 0,05 g Natriumhypochlorit und 1000,00 g Wasser.

## Revendications

1. Méthode de détection et/ou de quantification par extraction et concentration de contaminants sous la forme de composés hydrophiles, de matériaux biologiques ou de particules dispersés ou distribués dans du carburant sous forme de matrices liquides hydrophobes/non polaires/non ioniques, comprenant les étapes suivantes, consistant à:

a) fournir un échantillon d'un liquide hydrophobe sous forme de matrice liquide hydrophobe/non polaire/non ionique ;
b) ajouter audit échantillon une solution de capture aqueuse comprenant 0,5-10,00 g de lécithine de soja, 0,01-0,20 g de bleu de méthylène, 0,01-0,05 g d'hypochlorite de sodium et 1000,00 g d'eau, qui est ajoutée à l'échantillon selon un rapport faible de 1:10 ou moins ;
c) mélanger minutieusement ledit échantillon et ladite solution de capture ;
d) permettre à la phase aqueuse de se séparer de la phase d'échantillon ;
e) mesurer le composé hydrophile ou le matériau biologique ou les particules dans la phase aqueuse.

2. Méthode selon la revendication 1, dans laquelle ladite solution de capture ajoutée contient de la lécithine selon une concentration efficace comprise entre 0,1 et 1% (p/v).

3. Réactif pour la quantification par extraction et concentration de composés hydrophiles, de matériaux biologiques ou de particules dispersés ou distribués dans des matrices liquides hydrophobes/non polaires, comprenant 0,5-10,00 g de lécithine de soja, 0,01-0,20 g de bleu de méthylène, 0,01-0,05 g d'hypochlorite de sodium et 1000,00 g d'eau.

Fig. 1

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0222854 A

### Non-patent literature cited in the description

- Standard IP 385/99: Determination of the viable aerobic microbial content of fuels and fuel components boiling below 390°C - Filtration and culture method IATA: Guidance Material on Microbiological Contamination in Aircraft Fuel Tanks. Effective. 01 December 2002

- **C. GAYLARDE et al.** Microbial contamination of stored hydrocarbon fuels and its control. *Revista de Microbiologia,* 1999, vol. 30, 1-10